# FASCICULE DE BREVET EUROPEEN

(11) **EP 2 123 578 B1**
(45) Date de publication et mention de la délivrance du brevet: **16.02.2011**
(21) Numéro de dépôt: 08305179.7
(22) Date de dépôt: 19.05.2008
(51) Int. Cl.: B65G 13/12, B65G 21/06

(54) **Pièce d'accrochage pour rail à galets, rail à galets pourvu d'une telle pièce, système de rails à galets et système de support, manutention, logistique, distribution ou stockage comportant au moins un tel système de rails à galets**
Ankopplungsteil für Rollenschiene, mit einem solchen Teil ausgestattete Rollenschiene, Rollenschienensystem und entsprechendes Support-, Wartungs-, Logistik-, Vertriebs- oder Lagersystem, das mindestens ein solches Rollenschienensystem umfasst
Attachment part for a roller track, roller track equipped with such a part, roller track system and support system, handling, logistics, distribution or storage system comprising at least one such roller track system

(43) Date de publication de la demande: 25.11.2009
(73) Titulaire: Trilogiq SA, 95310 Saint Ouen l'Aumone (FR)
(72) Inventeur: Courtin, Eric, 92200 Neuilly-sur-Seine (FR)
(74) Mandataire: Derambure, Christian

(56) Documents cités:
- EP-A- 0 343 837
- EP-A- 0 545 285
- DE-A1- 3 731 404
- GB-A- 707 892
- US-A- 1 421 540
- US-A- 1 519 416
- US-A- 1 693 344
- US-A- 2 979 178
- US-A- 3 458 023

## Description

L'invention concerne un système de rails à galets et un système de support, manutention, logistique, distribution ou stockage comportant au moins un tel système de rails à galets; ledit système de rails à galets comportant un rail à galets pourvu d'une pièce d'accrochage, ladite pièce d'accrochage étant spécialement destinée, d'une part, à être reçue et supportée par un support profilé faisant partie du système de rails à galets, d'autre part, à supporter le rail à galets.

On connaît et on met en oeuvre dans les usines, les zones de manutention ou stockage, les implantations de distribution ou de logistique, des systèmes de support, manutention, logistique, distribution ou stockage comportant au moins une - et généralement une pluralité de - piste(s) de circulation de conteneurs ou analogue, reliant différents emplacements fonctionnels d'activité.

On sait qu'une telle piste comporte un système de rails à galets unique ou plusieurs systèmes de rails à galets écartés transversalement et disposés parallèlement.

On sait aussi qu'un tel système de rails à galets comporte un support profilé disposé horizontalement ou sensiblement horizontalement recevant et supportant une première pièce d'accrochage d'un premier rail à galets et une seconde pièce d'accrochage d'un second rail à galets, le premier et le second rails à galets, identiques en ce qui concerne leur constitution, faisant partie de la même piste et devant être disposés dans une continuité d'alignement d'ensemble l'un par rapport à l'autre.

Dans une réalisation connue, un tel rail à galets comporte, en premier lieu, une gouttière support ayant deux flasques latéraux formant rives longitudinales, disposés l'un en regard de l'autre et écartés l'un de l'autre, en deuxième lieu, des galets support disposés les uns à côté des autres, parallèlement les uns aux autres, dont les axes sont portés par les flasques, les galets saillant au dessus des flasques pour former un plan d'appui des conteneurs ou analogue et, en troisième lieu, à au moins une partie extrême libre de la gouttière support, une pièce d'accrochage comportant une patte médiane dont la largeur latérale correspond au moins sensiblement à la largeur latérale du rail lui-même.

Dans une réalisation connue, un tel rail à galets peut avoir une certaine inclinaison sur l'horizontale, les conteneurs ou analogue se déplaçant par gravité.

La disposition constructive précédemment exposée pose problème en ce qui concerne la continuité d'alignement des deux rails à galets.

A cet effet, selon une première réalisation connue, il est prévu un support ayant deux parties analogues, juxtaposées mais espacées, de forme générale cylindrique ou prismatique. Dans ce cas, la première partie du support profilé reçoit et supporte la première pièce d'accrochage du premier rail à galets et la seconde partie du support profilé reçoit et supporte la seconde pièce d'accrochage du second rail à galets. Avec une telle réalisation, le premier rail et le second rail peuvent avoir une continuité d'alignement parfaite. En revanche, il est indispensable d'avoir un support ayant deux parties, chacune pour une pièce d'accrochage, avec les inconvénients inhérents (coût, encombrement...). En outre, il faut prévoir d'assurer le calage latéral des deux rails l'un par rapport à l'autre.

Selon une seconde réalisation connue, il est prévu un support ayant une seule partie de forme générale cylindrique ou prismatique. Dans ce cas, cette même partie reçoit et supporte à la fois la première pièce d'accrochage du premier rail à galets et la seconde pièce d'accrochage du second rail à galets, ces deux pièces d'accrochage devant alors obligatoirement être décalées latéralement l'une par rapport à l'autre. Avec une telle réalisation, le premier rail et le second rail ne peuvent pas avoir une continuité d'alignement parfaite, cet inconvénient étant la contrepartie de l'avantage d'un support ayant une seule partie.

Ainsi, ni la première réalisation ni la seconde réalisation qui vient d'être décrite ne donne satisfaction.

Il est également connu de l'état de la technique le document US-A-3,458,023 qui décrit une structure utilisée dans des systèmes de distribution de conteneurs comportant des convoyeurs légèrement inclinés par rapport à l'horizontale afin d'acheminer les conteneurs d'un point amont à un point aval. La surface inclinée est limitée par des rouleaux dont les axes sont portés par deux longerons latéraux sur lesquels sont fixés deux plaques latérales espacées l'une de l'autre, qui se projettent vers l'avant et qui sont également fixées à des montants.

Le document EP-A-0 343 837 décrit, quant à lui, un convoyeur permettant la distribution d'articles d'un point amont vers un point aval, sous l'action de la gravité. Ce convoyeur comprend une structure dotée d'éléments de support verticaux ainsi qu'un cadre de réception supportant une pluralité de rails à rouleaux s'étendant selon une direction longitudinale. Le cadre de réception comprend des moyens de maintien pivots aptes à coopérer en liaison pivot avec les éléments de support verticaux ainsi que des moyens de maintien aptes à retenir le cadre à un certain degré d'inclinaison.

Le document GB-A-707,892 décrit un dispositif de convoyage permettant de supporter des rails de guidage pouvant être montés ou démontés sur leur position individuellement les uns des autres.

Le document US-B-2,979,178 décrit un assemblage de rails à galets s'étendant selon une direction longitudinale et formant une rampe de transfert pour réaliser la jonction entre deux voies de convoyage distinctes et distantes l'une de l'autre.

Le document DE-A-37 31 404 divulgue un système de rails à galets comportant un cadre doté d'une pluralité de rails à galets s'étendant selon une direction longitudinale. Ces rails à galets coopèrent avec des éléments de fixations agencés sur des barres de support de hauteur distinctes de manière à s'étendre selon une direction longitudinale inclinée par rapport à l'horizontale.

L'invention vise à résoudre le problème exposé précédemment en proposant un système de rails à galets comportant un support profilé ayant une seule et même partie de forme générale cylindrique ou prismatique apte à recevoir et supporter une première pièce d'accrochage d'un premier rail à galets et une seconde pièce d'accrochage d'un second rail à galets, le premier et le second rails à galets pouvant être disposés dans une parfaite continuité d'alignement l'un de l'autre.

A cet effet, selon un premier aspect, l'invention propose un système de rails à galets comportant un support profilé et deux rails à galets faisant partie d'une même piste, disposés dans une continuité d'alignement d'ensemble l'un par rapport à l'autre, dans lequel un premier rail à galets comporte une pièce d'accrochage à patte d'accrochage médiane et un second rail à galets comporte une pièce d'accrochage à deux pattes d'accrochage latérales séparées par un espace libre médian, la patte d'accrochage médiane du premier rail à galets étant disposée dans l'espace libre entre les deux pattes d'accrochage latérales du second rail à galets, les deux rails à galets pouvant être disposés en continuité d'alignement l'un de l'autre.

Le second rail à galets est spécialement destiné à former à lui seul ou en association avec un ou plusieurs autres rails à galets écarté(s) transversalement et disposé(s) parallèlement une piste de circulation pour un système de support, manutention, logistique, distribution ou stockage, apte(s) à supporter et à permettre le déplacement de conteneurs ou analogue, le rail à galets étant du type comportant, en premier lieu, une gouttière support ayant deux flasques latéraux formant rives longitudinales, disposés l'un en regard de l'autre et écartés l'un de l'autre, en deuxième lieu, des galets support disposés les uns à côté des autres, parallèlement les uns aux autres, dont les axes sont portés par les flasques de la gouttière support, les galets saillant au dessus des flasques pour former un plan d'appui des conteneurs ou analogue et, en troisième lieu, à au moins une partie extrême libre de la gouttière support, une pièce d'accrochage apte d'une part, à être reçue et supportée par un support profilé faisant partie d'un système de rails à galets, d'autre part, à supporter le rail à galets, caractérisé par une pièce d'accrochage rapportée ou intégrée comportant, formant un ensemble rigide, d'une part, une partie de réception d'une partie extrême libre d'une gouttière support faisant partie du rail à galets et ayant une forme de berceau en U ou pseudo U, d'autre part, une partie d'accrochage au support profilé prolongeant le berceau en U ou pseudo U de la partie de réception, caractérisée par le fait que la partie d'accrochage se présente sous la forme de deux pattes d'accrochage latérales séparées par un espace libre médian.

Selon une réalisation, les deux pattes d'accrochage sont attenantes ou sensiblement attenantes aux joues latérales du berceau en U ou pseudo U de la partie de réception en étant situées d'une part à l'extérieur du U ou pseudo U et d'autre part au voisinage du plan du bord de ses joues latérales opposé à l'âme, l'espace libre médian venant au moins substantiellement en prolongement de continuité d'alignement avec le berceau en U ou pseudo U de la partie de réception.

Selon une réalisation, la pièce d'accrochage comporte deux pattes d'accrochage incurvées dans leur partie extrême libre opposée au berceau en U ou pseudo U de la partie de réception, en étant dirigées vers le plan de l'âme du berceau en U ou pseudo U.

Selon une réalisation, la pièce d'accrochage comporte deux retours d'ailes dirigées l'un vers l'autre situés au bord des deux joues latérales opposées à l'âme du berceau en U ou pseudo U de la partie de réception.

Selon une réalisation, une pièce d'accrochage est distincte, rapportée et emmanchée sur la partie extrême libre de la gouttière support du rail.

Selon une réalisation, il est prévu un support profilé ayant une seule et même partie profilée apte à recevoir à la fois la patte d'accrochage médiane du premier rail à galets et, de part et d'autre de celle-ci, les deux pattes d'accrochage latérales du second rail à galets.

Selon une réalisation, l'écartement latéral intérieur entre les pattes d'accrochage latérales du second rail à galets, définissant la largeur latérale de l'espace libre que comporte ce second rail à galets, est ajusté ou sensiblement ajusté à la largeur latérale de la patte d'accrochage médiane du premier rail à galets, de manière à assurer un calage latéral du positionnement relatif des deux rails l'un par rapport à l'autre et leur parfaite continuité d'alignement l'un de l'autre.

Selon une réalisation, le système de rails à galets comporte deux rails à galets inclinés l'un par rapport à l'autre autour de l'axe du support profilé.

Selon un deuxième aspect, l'invention propose un système de support, manutention, logistique, distribution ou stockage comportant au moins une piste de circulation de conteneurs ou analogue, une telle piste comportant un système de rails à galets unique ou plusieurs systèmes de rails à galets écartés transversalement et disposés parallèlement, le ou les système(s) de rails à galets étant tels que décrit(s) précédemment.

On décrit maintenant plusieurs modes de réalisation de l'invention à l'aide des dessins dans lesquels :
- La figure 1 est une vue en perspective, partielle un système de rails à galets illustrant le support profilé fixe supportant deux rails à galets disposés en parfaite continuité d'alignement l'un de l'autre.
- La figure 2 est une vue en perspective analogue à la figure 1, le rail à galets étant dissocié du support profilé.

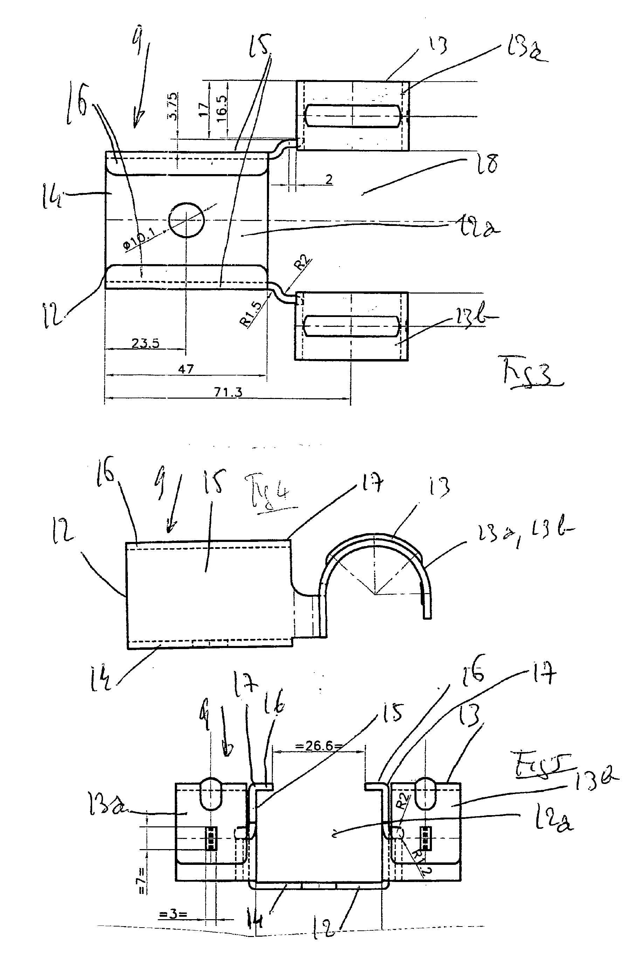

- La figure 3 est une vue de dessus de la pièce d'accrochage.
- La figure 4 est une vue latérale de la pièce d'accrochage.
- La figure 5 est une vue d'extrémité de la pièce d'accrochage.

Comme indiqué, l'invention se situe dans le contexte des systèmes de support, manutention, logistique, distribution ou stockage, du type comportant au moins une piste de circulation de conteneurs ou analogue.

Une telle piste comporte un système de rails à galets unique ou plusieurs systèmes de rails à galets écartés transversalement et disposés parallèlement.

Un tel système de rails à galets comporte d'abord un support profilé 1, fixe, disposé horizontalement ou sensiblement horizontalement. Dans une réalisation typique, le support profilé 1 est un tube à section droite circulaire.

Le système de rails à galets comporte ensuite deux rails à galets 2, 3, faisant partie d'une même piste et disposés dans une continuité d'alignement d'ensemble l'un par rapport à l'autre.

On décrit maintenant la structure générale d'un tel rail à galets 2, 3, apte à supporter et à permettre le déplacement de conteneurs ou analogue.

Le rail à galets 2, 3 comporte, en premier lieu, une gouttière support 4 ayant deux flasques latéraux 5 formant rives longitudinales, disposés l'un en regard de l'autre et écartés l'un de l'autre. Cette gouttière support 4 a la longueur appropriée à l'usage souhaité.

Le rail à galets 2, 3 comporte, en deuxième lieu, une pluralité de galets support 6, disposés les uns à côté des autres, parallèlement les uns aux autres, dont les axes sont portés par les flasques latéraux 5 de la gouttière support 4.

Les galets 6 sont disposés sur la gouttière support 4 de manière à saillir sur une face des flaques latéraux 5. Dans le système de rails de galets, cette face est dirigée vers le haut. Les galets 6 saillent alors au dessus des flasques latéraux 5 pour former, ensemble, un plan d'appui des conteneurs ou analogue. Ce plan d'appui peut être incliné sur l'horizontale, les conteneurs ou analogue pouvant se déplacer par gravité.

Les galets 6 sont montés sur la gouttière support 4 de manière appropriée, par exemple avec des moyens de frottement doux, évitant que les galets 6 ne pivotent trop rapidement.

Le rail à galets 2, 3 comporte, en troisième lieu, à au moins une partie extrême libre 7 de la gouttière support 4, une pièce d'accrochage 8, 9, respectivement.

La pièce d'accrochage 8, 9 est apte d'une part, à être reçue et supportée par le support profilé 1, d'autre part, à supporter le rail à galets 2, 3, respectivement.

On décrit maintenant la pièce d'accrochage 8 associée au rail à galets 2.

La pièce d'accrochage 8, connue en soi, comporte, formant un ensemble rigide, d'une part, une partie de réception 10 de la partie extrême libre 7 de la gouttière support 4 faisant partie du rail à galets 2, d'autre part, une partie d'accrochage 11 au support profilé 1.

La partie de réception 10 a une forme de berceau en U ou pseudo U.

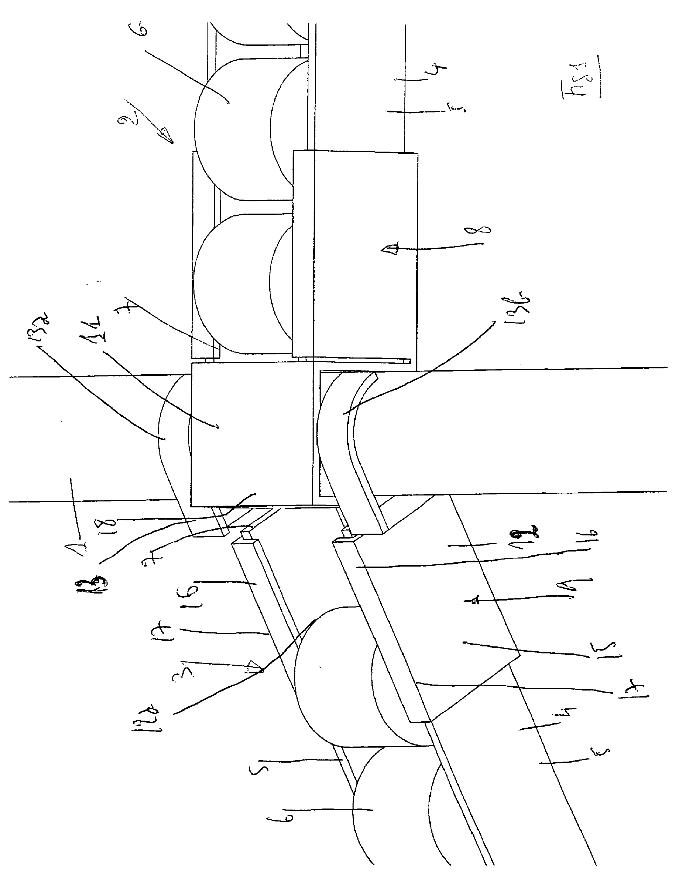

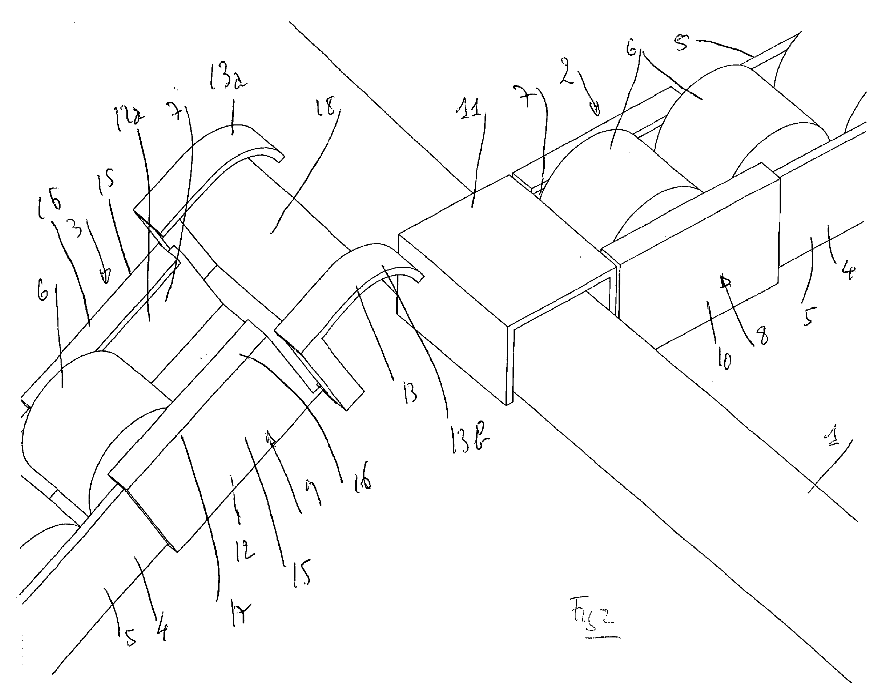

La partie d'accrochage 11 se présente sous la forme d'une patte en crochet, médiane, venant en continuité d'alignement avec le berceau en U ou pseudo U de la partie de réception 10 du rail à galets 2. Comme on le voit sur les figures 1 et 2, la largeur latérale de la patte médiane 11 est identique ou sensiblement identique à la largeur du berceau en U ou pseudo U de la partie de réception 10.

Bien entendu, on ne peut exclure le cas où la patte médiane 11 serait en plusieurs parties ni le cas où la largeur latérale de la patte médiane 11 serait plus petite que la largeur du berceau en U ou pseudo U de la partie de réception 10.

On décrit maintenant la pièce d'accrochage 9, selon l'invention, associée au rail à galets 3.

La pièce d'accrochage 9 comporte, à l'instar de la pièce d'accrochage 8, formant un ensemble rigide, d'une part, une partie de réception 12 de la partie extrême libre 7 de la gouttière support 4 faisant partie du rail à galets 3, d'autre part, une partie d'accrochage 13 au support profilé 1.

La partie de réception 12 peut être identique ou analogue à la partie de réception 10 de la pièce d'accrochage 8.

La partie de réception 12 a donc une forme de berceau en U ou pseudo U d'une longueur suffisante pour assure un support convenable de la gouttière support 4.

La partie de réception 12 comporte une âme 14 qui, dans le système de rails de galets, est dirigée vers le bas, à l'opposé du plan d'appui des conteneurs ou analogue.

Le berceau de la partie de réception 12 comporte en outre deux joues latérales 15 formant le U ou le pseudo U avec l'âme 14.

Dans la réalisation représentée sur les figures, il est prévu deux retours d'ailes 16, dirigés l'un vers l'autre, situés chacun sur le bord 17 de l'une des deux joues latérales 15 opposé à l'âme 14.

L'âme 14, les deux joues latérales 15 et les retours d'ailes 16 délimitent un espace libre 12a dans lequel peut être rapportée et emmanchée la partie extrême libre 7 de la gouttière support 4.

Dans ce cas, la pièce d'accrochage 9 est distincte mais rapportée sur la gouttière support 4 du rail 3.

Dans une autre réalisation, la pièce d'accrochage 9 est intégrée la gouttière support 4 du rail 3 pour être venue de fabrication avec elle.

La partie d'accrochage 13 diffère de la partie d'accrochage 11.

La partie d'accrochage 13 se présente sous la forme de deux pattes d'accrochage latérales 13a, 13b, séparées par un espace libre médian 18. Cet espace libre 18 est apte à permettre d'y placer la partie d'accrochage 11 d'une pièce d'accrochage 8 à patte d'accrochage médiane appartenant au rail à galets 2 faisant partie du même systèmes de rails à galets que le rail à galets 3.

Les deux pattes d'accrochage 13a, 13b sont attenantes ou sensiblement attenantes aux joues latérales 15 du berceau en U ou pseudo U de la partie de réception 12. Elles sont situées d'une part à l'extérieur du U ou pseudo U et d'autre part au voisinage du plan du bord 17 des deux joues latérales 15.

L'espace libre médian 18 de partie d'accrochage 13 de la pièce d'accrochage 9 vient au moins substantiellement en prolongement de continuité d'alignement avec le berceau en U ou pseudo U de la partie de réception 12 de cette même pièce d'accrochage 9.

Dans la réalisation représentée sur les figures, les deux pattes d'accrochage 13a, 13b sont conformées de manière à épouser la forme du support profilé 1. Par exemple, les deux pattes d'accrochage 13a, 13b sont incurvées dans leur partie extrême libre opposée au berceau en U ou pseudo U de la partie de réception 12, en étant dirigées vers le plan de l'âme 14.

La patte d'accrochage médiane 11 du rail à galets 2 étant disposée dans l'espace libre 18 entre les deux pattes d'accrochage latérales 13a, 13b du rail à galets 3, les deux rails à galets 2, 3 peuvent être disposés en continuité d'alignement l'un de l'autre.

Dans la réalisation représentée sur les figures, l'écartement latéral intérieur entre les pattes d'accrochage latérales 13a, 13b du rail à galets 3, définissant la largeur latérale de l'espace libre 18 que comporte ce rail à galets 3, est ajusté ou sensiblement ajusté à la largeur latérale de la patte d'accrochage médiane 11 du rail à galets 2.

Cette disposition constructive assure un calage latéral du positionnement relatif des deux rails 2, 3 l'un par rapport à l'autre et leur parfaite continuité d'alignement l'un de l'autre.

Comme on l'a compris, le système de rails à galets qui vient d'être décrit autorise un support profilé 1 n'ayant qu'une seule et même partie profilée, laquelle est apte à recevoir à la fois la patte d'accrochage médiane 11 du rail à galets 2 et, de part et d'autre de celle-ci, les deux pattes d'accrochage latérales 13a, 13b du rail à galets 3.

Selon une réalisation, les deux rails à galets 2, 3 sont inclinés l'un par rapport à l'autre autour de l'axe du support profilé 1.

Selon une réalisation, il est prévu un trou 19 dans l'âme permettant le passage d'une vis de fixation de la pièce d'accrochage 9 sur le rail à galets 3.

## Revendications

1. Système de rails à galets (2, 3) comportant un support profilé (1) et deux rails à galets (2, 3) faisant partie d'une même piste, disposés dans une continuité d'alignement d'ensemble l'un par rapport à l'autre ;
dans lequel un premier rail à galets (2) comporte une pièce d'accrochage (8) à patte d'accrochage médiane ;
dans lequel un second rail à galets (3) est spécialement destiné à former en association avec un ou plusieurs autres rails à galets (2, 3) écarté(s) transversalement et disposé(s) parallèlement une piste de circulation pour un système de support, manutention, logistique, distribution ou stockage, apte(s) à supporter et à permettre le déplacement de conteneurs ou analogue ;
le second rail à galets (3) comportant :
■ en premier lieu, une gouttière support (4) ayant deux flasques latéraux (5) formant rives longitudinales, disposés l'un en regard de l'autre et écartés l'un de l'autre ;
■ en deuxième lieu, des galets support (6) disposés les uns à côté des autres, parallèlement les uns aux autres, dont les axes sont portés par les flasques latéraux (5) de la gouttière support (4), les galets support (6) saillant au dessus des flasques latéraux (5) pour former un plan d'appui des conteneurs ou analogue ; et
■ en troisième lieu, à au moins une partie extrême libre (7) de la gouttière support (4), une pièce d'accrochage (9) apte d'une part, à être reçue et supportée par un support profilé (1) faisant partie du système de rails à galets, apte d'autre part, à supporter le second rail à galets (3) ;
**caractérisé par le fait que** :
■ la pièce d'accrochage (9) du second rail à galets (3), rapportée ou intégrée, comporte, formant un ensemble rigide,
o d'une part, une partie de réception (10) d'une partie extrême libre (7) de la gouttière support (4) faisant partie du second rail à galets (3) et ayant une forme de berceau en U ou pseudo U,
o d'autre part, une partie d'accrochage (11) au support profilé (1) prolongeant le berceau en U ou pseudo U de la partie de réception ;
■ la partie d'accrochage (11) se présente sous la forme de deux pattes d'accrochage latérales (13a, 13b) séparées par un espace libre médian (18) ;
■ la patte d'accrochage médiane du premier rail à galets (2) est disposée dans l'espace libre entre les deux pattes d'accrochage latérales (13a, 13b) du second rail à galets (3), les deux rails à galets (2, 3) pouvant être disposés en continuité d'alignement l'un de l'autre.

2. Système de rails à galet selon la revendication 1, dans lequel les deux pattes d'accrochage latérales (13a, 13b) de la partie d'accrochage (11) du second rail à galets (3) sont attenantes ou sensiblement attenantes aux joues latérales du berceau en U ou pseudo U de la partie de réception (10) en étant situées d'une part à l'extérieur du U ou pseudo U et d'autre part au voisinage du plan du bord de ses joues latérales opposé à l'âme, l'espace libre médian (18) venant au moins substantiellement en prolongement de continuité d'alignement avec le berceau en U ou pseudo U de la partie de réception (10).

3. Système de rails à galets (2, 3) selon la revendication 1 ou 2, dans lequel les deux pattes d'accrochage latérales (13a, 13b) de la partie d'accrochage du second rail à galets (3) sont incurvées dans leur partie extrême libre opposée au berceau en U ou pseudo U de la partie de réception, en étant dirigées vers le plan de l'âme du berceau en U ou pseudo U.

4. Système de rails à galets (2, 3) selon l'une quelconque des revendications 1 à 3, dans lequel la pièce d'accrochage (9) du second rail à galets (3) comporte deux retours d'ailes dirigées l'un vers l'autre situés au bord des deux joues latérales opposées à l'âme du berceau en U ou pseudo U de la partie de réception.

5. Système de rails à galets (2, 3) selon l'une quelconque des revendications 1 à 4, dans lequel la pièce d'accrochage (9) est distincte, rapportée et emmanchée sur la partie extrême libre de la gouttière support (4) du second rail à galets (3).

6. Système de rails à galets (2, 3) selon l'une quelconque des revendications 1 à 5, dans lequel le support profilé (1) présente une seule et même partie profilée apte à recevoir à la fois la patte d'accrochage médiane du premier rail à galets (2) et, de part et d'autre de celle-ci, les deux pattes d'accrochage latérales (13a, 13b) du second rail à galets (3).

7. Système de rails à galets (2, 3) selon l'une quelconque des revendications 1 à 6, dans lequel l'écartement latéral intérieur entre les pattes d'accrochage latérales (13a, 13b) du second rail à galets (3), définissant la largeur latérale de l'espace libre que comporte ce second rail à galets (3), est ajusté ou sensiblement ajusté à la largeur latérale de la patte d'accrochage médiane du premier rail à galets (2), de manière à assurer un calage latéral du positionnement relatif des premier et second rails à galets (2, 3) l'un par rapport à l'autre et leur parfaite continuité d'alignement l'un de l'autre.

8. Système de rails à galets (2, 3) selon l'une quelconque des revendications 1 à 7, **caractérisé par le fait que** les des premier et second rails à galets (2, 3) sont inclinés l'un par rapport à l'autre autour de l'axe du support profilé (1).

9. Système de support, manutention, logistique, distribution ou stockage comportant au moins une piste de circulation de conteneurs ou analogue, une telle piste comportant un système de rails à galets (2, 3) unique ou plusieurs systèmes de rails à galets (2, 3) écartés transversalement et disposés parallèlement, le ou les système(s) de rails à galets (2, 3) étant selon l'une quelconque des revendications 1 à 8.

## Claims

1. Roller rail system (2, 3), having a profiled support (1) and two roller rails (2, 3), forming part of the same track, arranged in an overall continuity of alignment in relation to one another; wherein a first roller rail (2) comprises an attachment component (8) with a median attachment lug; wherein a second roller rail (3) is specifically intended to form, in combination with one or several other roller rails (2, 3) spaced transversally and arranged in parallel, a conveyor track for a support, handling, logistic, distribution or storage system capable of supporting and allowing moving of containers or similar items; the second roller rail (3) comprising:
* firstly a support groove (4) having two lateral flanges (5) forming longitudinal edges, arranged opposite one another and spaced apart from one another;
* secondly, support rollers (6) arranged adjacent to each other and parallel to one another, the axes of which are borne by the lateral flanges (5) of the support groove (4), with the support rollers (6) projecting above the lateral flanges (5) in order to form a support surface for the containers or similar items; and
* thirdly, on at least one free end (7) of the support groove (4), an attachment component (9) capable on the one hand of being received and supported by a profiled support (1) forming part of the roller rail system and capable on the other hand of supporting the second roller rail (3); **characterised in that**:
* the attachment component (9) of the second roller rail (3), added or integrated, comprises, forming a rigid whole,
- on the one hand, a receiving section (10) for a free end section (7) of the support groove (4) forming part of the second roller rail (3) and cradle-shaped as a U or pseudo-U,
on the other hand, an attachment section (11) on the profiled support (1) extending the U-shaped or pseudo-U-shaped cradle of the receiving section;
* the attachment section (11) is designed in the form of two lateral attachment lugs (13a, 13b), separated by a median gap (18);
* the median attachment lug of the first roller rail (2) is arranged in the gap between the two lateral attachment lugs (13a, 13b) of the second roller rail (3) and the two roller rails (2, 3) can be arranged in continuity of alignment of each other.

2. Roller rail system according to claim 1, wherein the two lateral attachment lugs (13a, 13b) of the attachment section (11) of the second roller rail (3) are adjacent or roughly adjacent to the lateral cheeks of the U-shaped or pseudo-U-shaped cradle of the receiving section (10), being located on the one hand on the outside of the U or pseudo-U and on the other hand in the proximity of the plane of the edge of its lateral cheeks opposite the centre, with the median gap (18) substantially extending continuity of alignment with the U-shaped or pseudo-U-shaped cradle of the receiving section (10).

3. Roller rail system (2, 3) according to claim 1 or 2, wherein the two lateral attachment lugs (13a, 13b) of the attachment section of the second roller rail (3) are curved in their free end section opposite the U-shaped or pseudo-U-shaped cradle of the receiving section, being oriented towards the plane of the centre of the U-shaped or pseudo-U-shaped cradle.

4. Roller rail system (2, 3) according to any of claims 1 to 3, wherein the attachment section (9) of the second roller rail (3) comprises two wing returns oriented towards each other located on the edge of the two lateral cheeks opposite the centre of the U-shaped or pseudo-U-shaped cradle of the receiving section.

5. Roller rail system (2, 3) according to any of claims 1 to 4, wherein the attachment section (9) is separate, added and clamped on to the free end section of the support groove (4) of the second roller rail (3).

6. Roller rail system (2, 3) according to any of claims 1 to 5, wherein the profiled support (1) displays one and the same profiled section capable of receiving both the median attachment lug of the first roller rail (2) and on either side of this lug, the two lateral attachment lugs (13a, 13b) of the second roller rail (3).

7. Roller rail system (2, 3) according to any of claims 1 to 6, wherein the inside lateral space between the lateral attachment lugs (13a, 13b) of the second roller rail (3), determining the lateral width of the gap presented by this second roller rail (3), is adjusted or roughly adjusted to the lateral width of the median attachment lug of the first roller rail (2) such as to ensure lateral wedging of the relative positioning of the first and second roller rails (2, 3) in relation to each other and their perfect continuity of alignment in relation to one another.

8. Roller rail system (2, 3) according to any of claims 1 to 7, **characterised in that** the first and second roller rails (2, 3) are angled in relation to one another around the axis of the profiled support (1).

9. Support, handling, logistic, distribution or storage system, comprising at least one conveyor track for containers or similar items, with a track of this kind comprising a single roller rail system (2, 3) or several roller rail systems (2, 3) spaced transversally and arranged in parallel, with the roller rail system(s) (2, 3) being according to any of claims 1 to 8.

## Patentansprüche

1. Rollenschienensystem (2, 3), bestehend aus einem Profilträger (1) und zwei Rollenschienen (2, 3), die zu einer selben Bahn gehören und eine in Bezug auf die andere fluchtend angeordnet sind;
bei dem eine erste Rollenschiene (2) ein Einhakteil (8) mit mittlerer Einhaklasche aufweist;
bei dem eine zweite Rollenschiene (3) speziell dazu bestimmt ist, gemeinsam mit einer oder mehreren, in Querrichtung mit Abstand und parallel angeordneten Rollenschiene(n) (2, 3), eine Laufbahn für eine Trag-, Beförderungs-, Logistik-, Verteilungs- oder Lagersystem zu bilden, und die geeignet sind, Container oder dergleichen zu tragen und ihr Verschieben zu ermöglichen;
wobei die zweite Rollenschiene (3) folgendes umfasst:
• erstens, eine Tragrinne (4) mit zwei, längliche Kanten bildenden Seitenflanschen (5), die sich gegenüberliegend und im Abstand zueinander angeordnet sind;
• zweitens, Tragrollen (6), die nebeneinander und parallel zueinander angeordnet sind, deren Achsen von den Seitenflanschen (5) der Tragrinne (4) getragen werden, wobei die Tragrollen (6) über die Seitenflansche (5) hinausragen, um eine Abstützfläche für Container oder dergleichen zu bilden; und
• drittens, an mindestens einem freien Ende (7) der Tragrinne (4), ein Einhakteil (9), das einerseits in einem Profilträger (1) aufgenommen und von diesem getragen werden kann, der Bestandteil des Rollentragsystems ist, und das andererseits die zweite Rollenschiene (3) tragen kann;
**dadurch gekennzeichnet, dass**:
• das eingesetzte oder integrierte Einhakteil (9) der zweiten Rollenschiene (3) aus folgenden, eine steife Einheit bildenden Teilen besteht,
- einerseits einem Aufnahmeteil (10) eines freien Endteils (7) der Tragrinne (4), die zur zweiten Rollenschiene (3) gehört, in Form einer U-förmigen oder etwa U-förmigen Gabel,
- andererseits einem Einhakteil (11) am Profilträger (1), das die U-förmige oder etwa U-förmige Gabel des Aufnahmeteils verlängert;
• das Einhakteil (11) aus zwei seitlichen Einhaklaschen (13a, 13b) besteht, die von einem freien Mittelraum (18) getrennt werden;
• die mittlere Einhaklasche der ersten Rollenschiene (2) im Freiraum zwischen den beiden seitlichen Einhaklaschen (13a, 13b) der zweiten Rollenschiene (3) angeordnet ist, wobei die beiden Rollenschienen (2, 3) eine in Bezug auf die andere fluchtend angeordnet sein können.

2. Rollenschienensystem gemäß Anspruch 1, bei dem die beiden seitlichen Einhaklaschen (13a, 13b) des Einhakteils (11) der zweiten Rollenschiene (3) angrenzen oder etwa angrenzen an die Seitenwangen der U-förmigen oder etwa U-förmigen Gabel des Aufnahmeteils (10), wobei sie einerseits außerhalb der U-Form oder etwa U-Form und andererseits in der Nähe der Randfläche seiner dem Kern gegenüberliegenden Seitenwangen sitzen, wobei der mittlere Freiraum (18) die Fluchtung mit der U-förmigen oder etwa U-förmigen Gabel des Aufnahmeteils (10) zumindest beträchtlich verlängert.

3. Rollenschienensystem (2, 3) gemäß Anspruch 1 oder 2, bei dem die beiden seitlichen Einhaklaschen (13a, 13b) des Einhakteils der zweiten Rollenschiene (3) an ihrem freien Endteil gegenüber der U-förmigen oder etwa U-förmigen Gabel des Aufnahmeteils gekrümmt sind, wobei sie sich zum Kern der U-förmigen oder etwa U-förmigen Gabel hin richten.

4. Rollenschienensystem (2, 3) gemäß einem der Ansprüche 1 bis 3, bei dem das Einhakteil (9) der zweiten Rollenschiene (3) zwei zueinander gerichtete Schenkelrückläufe am Rand der beiden dem Kern der U-förmigen oder etwa U-förmigen Gabel des Aufnahmeteils gegenüberliegenden Seitenwangen aufweist.

5. Rollenschienensystem (2, 3) gemäß einem der Ansprüche 1 bis 4, bei dem das Einhakteil (9) getrennt, angesetzt oder auf das freie Endteil der Tragrinne (4) der zweiten Rollenschiene (3) aufgesetzt ist.

6. Rollenschienensystem (2, 3) gemäß einem der Ansprüche 1 bis 5, bei dem das Tragprofil (1) ein einziges und selbes Profilteil aufweist, das gleichzeitig die mittlere Einhaklasche der ersten Rollenschiene (2) und, auf beiden Seiten derselben, die beiden seitlichen Einhaklaschen (13a, 13b) der zweiten Rollenschiene (3) aufnehmen kann.

7. Rollenschienensystem (2, 3) gemäß einem der Ansprüche 1 bis 6, bei dem der seitliche Innenabstand zwischen den seitlichen Einhaklaschen (13a, 13b) der zweiten Rollenschiene (3), der die seitliche Breite des Freiraums dieser zweiten Rollenschiene (3) definiert, der seitlichen Breite der mittleren Einhaklasche der ersten Rollenschiene (2) angepasst oder etwa angepasst ist, um so eine seitliche Festlegung der relativen Positionierung der ersten und zweiten Rollenschiene (2, 3) zueinander sowie deren perfekte Fluchtung zu gewährleisten.

8. Rollenschienensystem (2, 3), gemäß einem der Ansprüche 1 bis 7, **dadurch gekennzeichnet, dass** die erste und die zweite Rollenschiene (2, 3) eine in Bezug auf die andere um die Achse des Profilträgers (1) herum geneigt sind.

9. Trag-, Beförderungs-, Logistik-, Verteilungs- oder Lagersystem, bestehend aus mindestens einer Laufbahn
für Container oder dergleichen, wobei eine derartige Laufbahn ein einziges oder mehrere Rollenschienensysteme (2, 3) aufweist, die in Querrichtung und mit Abstand parallel angeordnet sind, wobei das oder die Rollenschienensysteme (2, 3) einem der Ansprüche 1 bis 8 entsprechen.
